Europäisches Patentamt

European Patent Office

Office européen des brevets

(19)

(11) Veröffentlichungsnummer: **0 077 462**
**B1**

(12) **EUROPÄISCHE PATENTSCHRIFT**

(45) Veröffentlichungstag der Patentschrifft:
17.01.90

(21) Anmeldenummer: **82108300.3**

(22) Anmeldetag: **09.09.82**

(51) Int. Cl. 4: **C 01 B 31/10, B 01 J 8/40**

(54) Verfahren und Vorrichtung zum Aktivieren von Aktivkohle.

(30) Priorität: 08.10.81 DE 3139926
22.10.81 DE 3141906

(43) Veröffentlichungstag der Anmeldung:
27.04.83 Patentblatt 83/17

(45) Bekanntmachung des Hinweises auf die Patenterteilung:
17.01.90 Patentblatt 90/03

(84) Bennante Vertragsstaaten:
BE DE FR GB NL

(56) Entgegenhaltungen:
EP-A-0 049 343
DE-B-2 615 437
DE-C-583 206
GB-A-2 060 595
US-A-3 161 483
US-A-3 976 597
US-A-4 058 374

(73) Patentinhaber: Degussa Aktiengesellschaft
Weissfrauenstrasse 9
D-6000 Frankfurt am Main 1 (DE)

(72) Erfinder: Schirrmacher, Rüdiger
Philipp-Reis-Strasse 16
D-6450 Hanau (DE)
Erfinder: Semmerau, Gisbert
Mittelweg 7
D-6361 Reichelsheim 2 (DE)

EP 0 077 462 B1

LIBERGRAF, STOCKHOLM 1990

## Beschreibung

Es ist bekannt, kohlenstoffhaltige Rohstoffe zu aktivieren. Dazu werden verschiedene Ofentypen verwendet, von denen jedoch nur die folgenden drei allgemeinere Bedeutung erlangt haben:

der direkt beheizte Drehrohrofen
der Etagenofen und
der Fließbettofen

Der direkt beheizte Drehrohrofen, der sich schon früh bei anderen Hochtemperaturverfahren wegen seiner Robustheit bewährt hat, ist wohl die erste und am häufigsten verwendete großtechnische Aktivierungseinrichtung. Bei ihm erfolgt sowohl der Transport der Vergasungsmittel wie auch der Energietransport über die vom Gaskörper berührte Oberfläche des Kohlebetts, während der Abtransport der Reaktionsgase über den gleichen Querschnitt erfolgen muß.

Damit wird diese überfläche zum größenbestimmenden Faktor der Drehrohrtechnologie, der in gewissen Grenzen durch Verstärkung der Oberflächenerneuerung (z. B. durch Drehzahlerhöhung, Einbau von Schaufeln) beeinflußt werden kann. (Vgl. H. Helmrich et al. Chem. Ing. Techn. 51 (1979), 8, 771; J. K. Brimacombe et al. Metallurgical Transactions 9B, (1978), 201).

Der Etagenofen wurde erst in neuester Zeit zur Herstellung und Reaktivierung von A-Kohlen eingesetzt (US-PS-3 994 829). Er besteht aus einem senkrecht stehenden ausgemauerten zylindrischen Gehäuse, das durch gemauerte Böden in einzelne Etagen unterteilt ist.

Die oben eintretende Kohle wird abwechselnd von innen nach außen und umgekehrt über die Böden gefördert und fällt durch Löcher auf den darunterliegenden Boden. Die horizontale Förderung der Kohle wird mittels Pflugscharen, die an sich drehenden Armen befestigt sind, bewerkstelligt. Hierdurch wird auch eine gewisse Oberflächenerneuerung erreicht. Die hochgeheizten Aktivierungsgase werden unten eingeleitet und von Etage zu Etage im Gegenstrom zur Kohle geführt. Jede Etage kann durch zusätzliche Brenner beheizt und/oder Zusatzdampf oder Sekundärluft eingeleitet werden.

Von Nachteil ist die komplizierte Mechanik dieses Etagenofens.

Um die Austauschfläche zwischen Kohle und Reaktionsgas zu vergrößern, liegt es nahe, das Kohlebett vom Gas durchströmen zu lassen. Dies kann im Festbett oder im Fließbett geschehen.

Der bekannte zylindrische Fließbettofen ist jedoch zur Aktivierung von Kohlen nicht geeignet, da er ein zu ungünstiges Verweilzeitspektrum aufweist. Bei Prozessen bei denen es auf möglichst hohen Umsatz ankommt (z. B. Kohlevergasung, Abfallverbrennung) ist das Verweilzeitverhalten des Einzelkorns ohne Belang. Der Aktivierungsprozeß ist dagegen ein Teilvergasungsprozeß, bei dem es (um ein homogenes Produkt zu erzielen) darauf ankommt, jedes einzelne Kohleteilchen möglichst den gleichen Aktivierungsbedingungen (Temperatur, Verweilzeit, $H_2O$-Teildruck) zu unterwerfen. Gleichmäßige Temperaturverteilung und guter Partialdruckausgleich infolge der intensiven Durchmischung, sind wesentliche Merkmale eines Fließbettes. Die ungeordnete Rückvermischung im zylindrischen Wirbelbett aber hat zur Folge, daß nach der mittleren Verweilzeit erst ca. 65 % des Feststoffes ausgetragen ist, während 10 % des Feststoffes mindestens die dreifache Verweilzeit in der Wirbelschicht verharrt (vgl. H. Jüntgen et al. Chem. Ing. Techn. 49 (1977) 2, MS447/77). Unterschiedliche Verweilzeiten bedingen aber unterschiedlichen Abbrand an den einzelnen Partikeln und damit Vergrößerung des Qualitätsspektrums.

Welchen entscheidenden Einfluß das Verweilzeitspektrum bei der Aktivierung von Kohle im Fließbett hat, läßt sich daraus erkennen, daß ein 15-stufiger Rundreaktor für diesen Zweck bekannt ist (J. Klein Chem. Ing. Teichn. 51 (1979) 4. MS 680/79).

Um unkontrollierte Rückvermischung zu vermeiden, wurden verschiedene Lösungen vorgeschlagen, z. B. Aufteilung des Reaktors in mehrere Einzelfießbetten, die als Kaskaden hintereinander geschaltet und in einem gemeinsamen Ofen untergebracht sind.

Eine andere Lösung ist aus US-PS-3 976 597 bekannt. Bier ist das Wirbelbett als rechteckige Rinne ausgebildet in der die fluidisierte Kohle - möglichst in Kolbenströmung - von der Einlauf- zur Auslaufseite wandert.

Der Transport wird durch Verdrängung des Bettinhaltes durch das eingebrachte Kohlevolumen bewerkstelligt. Die Aufteilung der Rinne in zwei oder mehrere Einzelrinnen soll das Verweilzeitspektrum noch weiter einengen.

Die Weiterentwicklung dieses Verfahrens stelle der BV-Wirbelschichtreaktor dar (US-PS-4 058 374). Bei diesem sind die Einzelrinnen nicht hintereinander sondern übereinander angeordnet, wobei das Fluidisierungsgas nacheinander die einzelnen Fließbetten durchströmt. Innerhalb der Einzelrinnen soll durch von oben in das Bett eintauchende Wehre Rückvermischung unterbunden werden.

Der Nachteil dieser Fließbett-Technologie ist, daß das Fludisierungsgas einmal als Reaktionsgas dient, zum anderen die für die endotherme Vergasungsreaktion erforderliche Wärme mitbringen muß. Daher können nur Feuerungsgase als Fluid-Medium verwendet werden, deren Temperatur entsprechend dem Wärmebedarf der Reaktion höher liegt als die infragekommenden Aktivierungstemperaturen. Die Verwendung von Feuerungsgasen als Fluidisierungsgas bedeutet aber auch, daß Wasserdampfpartialdrücke von höchstens 0,3 bis 0,4 bar erreicht werden können. Um den Schwebezustand im Wirbelbett aufrecht zu erhalten, ist eine ganz bestimmte Mindestfluidisierungsgeschwindigkeit erforderlich, die eine Funktion der Dichte des Gases (die sich mit der Temperatur ändert), des Schüttgewichtes der Kohle (das im Verlauf der Aktivierung abnimmt) und des Kohlekorndurchmessers ist.

Die gegenseitige Abhängigkeit der einzelnen Faktoren läßt vermuten, daß eine optimale Einstellung dieser Fließbett-Technologie nicht einfach ist.

Aus der DE-OS-2 615 437 ist ein weiterer Fließbettreaktor bekannt.

Der schädliche Rückvermischungseffekt soll bei diesem Reaktor durch ein größeres Höhe/Durchmesserverhältnis und dadurch vermieden werden, daß man die Kohle über ein bis auf den Rost abgetauchtes Rohr zuführt und an der Fließbettoberfläche abzieht.

Die Beheizung erfolgt indirekt über den Mantel des Reaktionsraumes und durch Vorheizen des Wasserdampfes. Das System gestattet es, mit - zumindest über dem Anströmboden - sehr hohen Wasserdampfpartialdrücken zu arbeiten. Bei großen Fließbetthöhen kommt es aber zu starker Großblasenbildung ("Bypass-Strömung"), so daß mit hohem Wasserdampfüberschuß gefahren werden muß. Zudem erfordert der durch die indirekte Beheizung zusätzlich bedingte Wärmeübergangswiderstand der Reaktorwandung entsprechend hohe Außentemperaturen.

Die Aktivierungsgase kann man in einem Wärmeaustauscher mit den Reaktionsabgasen auf Temperaturen zwischen 400 und 800°C erhitzen.

So kann man derartige Heizgase entgegen oder mit dem Rohkohlestrom führen.

Verfahren zum Aktivieren von Aktivkohle mittels Wasserdampf, dadurch gekennzeichnet, daß man die Reaktion in einem Vibrationsfließbett, das in einem waagerecht liegenden, direkt beheizten Raktionsraum angeordnet ist, wobei eine Vibrationsfließbettrinne 1 in einem Doppelmantel 3 derart angeordnet ist, daß der innere - außen isolierte - Mantel 3a den brennenden Gaskörper umschließt, hauptsächlich zur Reflexion der Wärmestrahlung dient und keinen mechanischen Belastungen unterworfen wird, und der äußere Mantel 3b, dem der innere Mantel als Strahlungsschutz dient, alle statischen Belastungen aufnimmt und auch für die Abdichtung des Ofeninneren gegen die äußere Atmosphäre sorgt, durchführt und man die Aktivierung bei den folgenden Temperaturbereichen durchführt:

| | |
|---|---|
| Dampftemperatur | 600 bis 800°C |
| Fließbett-Temperatur | 600 bis 950°C |
| Gaskörper-Temperatur | 950 bis 1200°C |

Diese Heizgase können beispielsweise durch Verbrennung eines Propan/Luftgemisches erzeugt werden. Man kann auch andere Heizgase oder flüssige Brennstoffe, z. B. Heizöl oder Teer verwenden.

Die Reaktionsabgase der Aktivierung können so geführt werden, daß mit ihnen die Rohkohle vorbehandelt wird.

Diese Vorbehandlung der Rohkohle, bei der man die Rohkohle trocknet, schwelt und/oder voroxidieren kann, kann während der Aufgabe der Kohle auf die Vibrationsfließbettrinne erfolgen.

Die Aufgabe der Rohkohle kann dabei so erfolgen, daß sie mittels einer Dosiervorrichtung, z. B. einer Dosierschnecke, in einen Trichter gegeben wird. Der Trichter wird dabei von den Raktionsabgasen umspült.

In einer Ausführungsform ist es möglich die Dosierung der Rohkohle mittels einer Vibrationsrinne, die gegebenenfalls in dem Reaktionsabgaskanal angeordnet ist, vorzunehmen.

Die Trocknung der Rohkohle kann in einer weiteren Ausführungsform nach der Aufgabe auf die Vibrationsfließbettrinne erfolgen, wobei der Raum unter dem Anströmboden geteilt ist und in dem ersten Teil die Reaktionsabgase zumindest teilweise eingeführt und durch die Rohkohle geleitet wird.

Bei der Aktivierung kann man zusätzlich durch eine oder mehrere Lanzen, die parallel zu der Vibrationsfließbettrinne angeordnet sind, und eine größere Anzahl von Bohrungen aufweisen, Sekundärluft in den Reaktionsraum einführen.

Bei vorgeschrittener Reaktion ist es möglich, die Beheizung ausschließlich durch Zufuhr von Sekundärluft durchzuführen.

Die Sekundärluft kann man in einem Wärmeaustauscher mit den Reaktionsabgasen auf Temperaturen zwischen 200 und 500°C vorheizen.

Ein weiterer Gegenstand der Erfindung ist eine Vorrichtung zur Durchführung des erfindungsgemäßen Verfahren, welche dadurch gekennzeichnet ist, daß eine Vibrationsfließbettrinne 1 in einem Doppelmantel 3 derart angeordnet ist, daß der innere - außen isolierte - Mantel 3 a den brennenden Gaskörper umschließt, hauptsächlich zur Reflexion der Wärmestrahlung dient und keinen mechanischen Belastungen unterworfen wird, und der äußere Mantel 3 b, dem der innere Mantel als Strahlungsschutz dient, alle statischen Belastungen aufnimmt und auch für die Abdichtung des Ofeninneren gegen die äußere Atmosphäre sorgt.

Der innere - außen isolierte - Mantel 3a umschließt den brennenden Gaskörper und dient hauptsächlich zur Reflexion der Wärmestrahlung. Da er temperaturmäßig (max. 1200°C) bis an die obere Grenze metallischer Werkstoffe belastet wird, ist dafür Sorge getragen, daß er keinen mechanischen Belastungen unterworfen wird. Während der äußere Mantel 3b - dem der innere Mantel als Strahlungsschutz dient - alle statischen Belastungen aufnimmt und auch für die Abdichtung des Ofeninneren gegen die äußere Atmosphäre sorgt.

Die Rohkohleaufgabevorrichtung kann in dem Reaktionsabgaskanal angeordnet sein.

Innerhalb des Doppelmantels 3 kann parallel zu der durch Vibrator 2 angetriebenen Vibrationsfließbettrinne 1 eine Sekundärluftlanze 16 angeordnet sein.

Die Vibrationsfließbettrinne kann zwei getrennte Gaszufuhröffnungen und eine Trennwand 18 aufweisen.

Das erfindungsgemäße Verfahren sowie die erfindungsgemäße Vorrichtung haben insbesondere die folgenden Vorteile:

Die angenäherte Kolbenströmung des Reaktionsgutes vermeidet die ungleichförmige Rückvermischung, wodurch ein enges Verweilzeitspektrum erreicht wird.

3

Die Kreuzstromführung des Fluidisierungsgases gewährleistet hohe Wasserdampfpartialdrücke im Kohlebett und schnelleren Abtransport der inhibierenden Produktgase, wie Wasserstoff und Kohlenmonoxid.

Die erfindungsgemäße Vorrichtung wird anhand der Zeichnung näher erläutert. Es zeigen

Figur 1   die erfindungsgemäße Vorrichtung im Längsschnitt
Figur 2   eine Ausgestaltung der erfindungsgemäßen Vorrichtung im Längsschnitt mit einem Kohlevortrockner
Figur 3   eine Ausgestaltung der erfindungsgemäßen Vorrichtung mit eingebauter Sekundärluftlanze im Längsschnitt
Figur 4   eine Ausgestaltung der erfindungsgemäßen Vorrichtung mit eingebauter Sekundärluftlanze und Kohletrockner im Vibrationsbett im Längsschnitt
Figur 5   die erfindungsgemäße Vorrichtung im Querschnitt

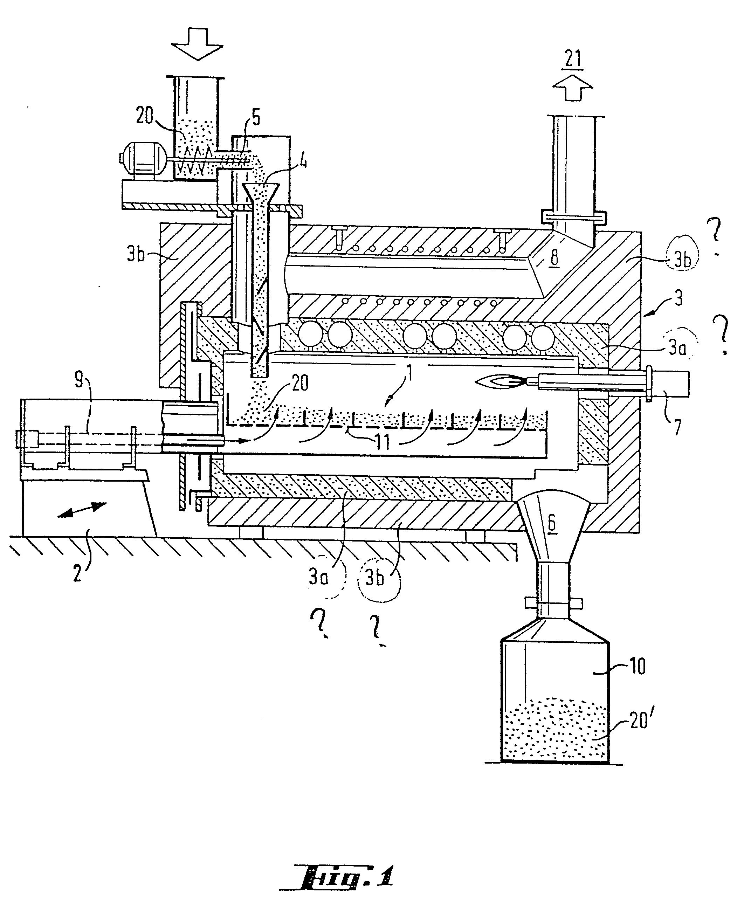

Gemäß Figur 1 besteht die erfindungsgemäße Vorrichtung aus der Vibrationsfließbettrinne 1, dem Vibrationsantrieb 2 für die Vibrationsfließbettrinne 1, dem Doppelmantel 3, der die Vibrationsfließbettrinne 1 umgibt, der Rohkohleaufgabe 4, die durch die Dosierschnecke 5 gespeist wird, der Produktaustragsöffnung 6 in dem Doppelmantel 3, dem Brenner 7, der Abgasöffnung 8 und der Wasserdampfzufuhrvorrichtung 9.

Die Rohkohle 20 wird mittels der Dosierschnecke 5 in die trichterförmige Rohkohleaufgabe 4 gegeben, wodurch sie auf die Vibrationsfließbettrinne 1 auffällt. Die Reaktionsabgase 21 werden gegenläufig an der Rohkohleaufgabe 4 entlang zu der Abgasöffnung 8 geführt. Die aktivierte Kohle 20' fällt über die Produktaustragsöffnung 6 in den Vorratsbehälter 10. Der für die Reaktion notwendige Wasserdampf wird über die Wasserdampfzufuhrvorrichtung 9 in die Vibrationsfließbettrinne 1 unterhalb der Rohkohle 20 durch den Anströmboden 11 durch das Reaktionsgut eingeführt.

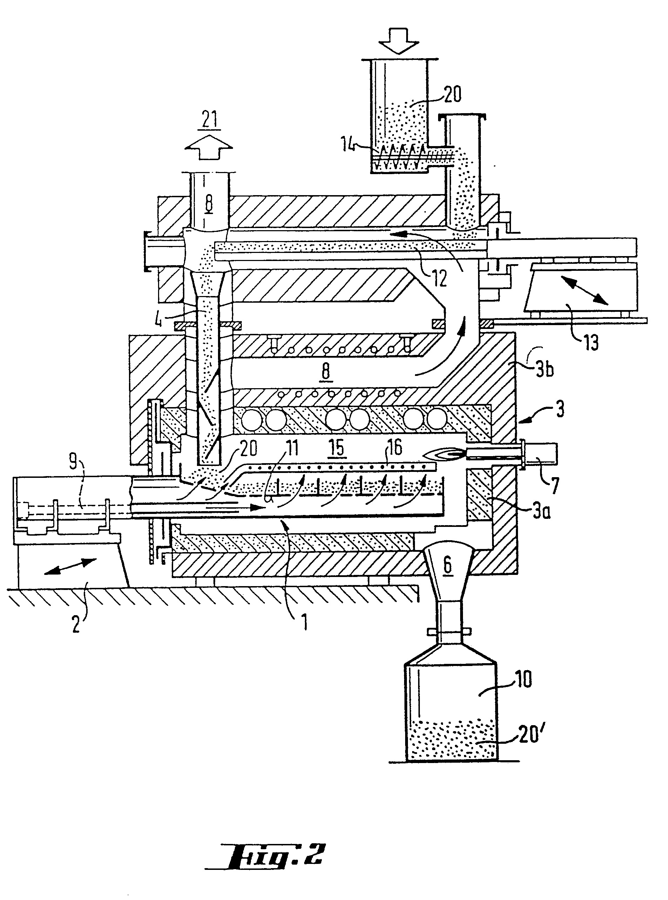

Gemäß der Figur 2 wird die Rohkohle 20 mittels einer Vibrationsrinne 12 in die Rohkohleaufgabe 4 dosiert. Diese Vibrationsrinne 12 wird mittels dem Motor 13 betrieben und ist derart angeordnet, daß die Rohkohle während des Transportes auf der Vibrationsrinne 12 durch die Reaktionsabgse vorgewärmt wird Die Rohkohle wird mittels der Dosierschnecke 14 auf die Vibrationsrinne 12 aufgegeben.

In den Reaktionsräumen 15 ist zusätzlich die Sekundärluftlanze 16 parallel zu der Vibrationsfließbettrinne 1 angeordnet.

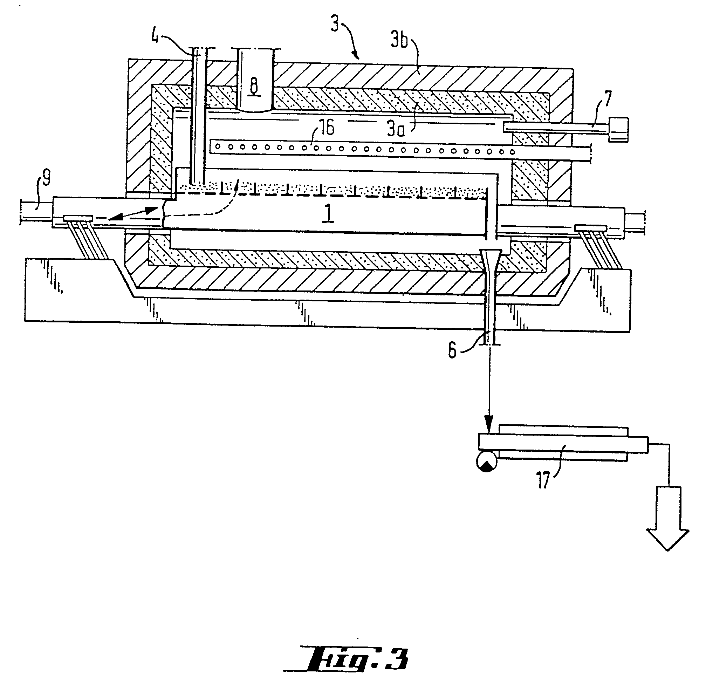

Gemäß Figur 3 ist die Sekundärluftlanze 16 gegen den Rohkohlestrom in der Vibrationsfließbettrinne 1 angeordnet, sodaß die zugeführte Luft im Gegenstrom zu dem Reaktionsgut geführt wird. Mit der Rohkohleaufgabevorrichtung 4 erfolgt die Aufgabe der Rohkohle direkt in die Vibrationsfließbettrinne 1. Der Austrag der Aktivkohle erfolgt in den Wendelwuchtkühler 17, wo eine Abkühlung des Reaktionsgutes unter die Reaktionstemperatur erfolgt.

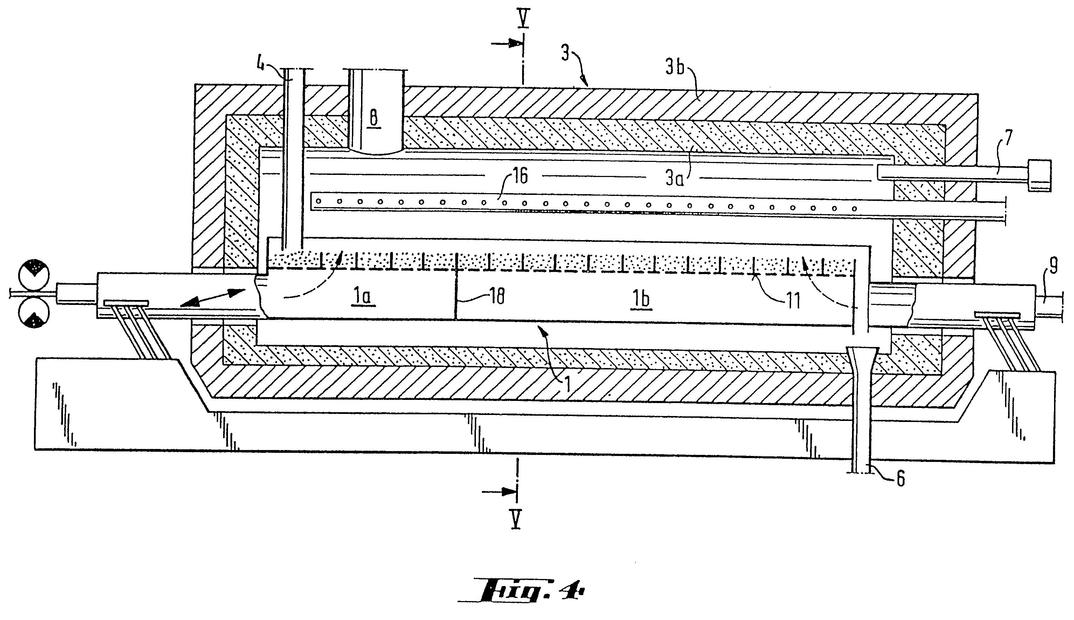

Gemäß Figur 4 ist die Vibrationsfließbettrinne 1 durch die Wand 18 in zwei Teile aufgeteilt. In dem Teil 1a wird Reaktionsabgas durch den Anströmboden 11 in die Rohkohle geführt, wodurch diese getrocknet wird. In dem Teile 1b der Vibrationsfließbettrinne 1 wird Wasserdampf zugeführt.

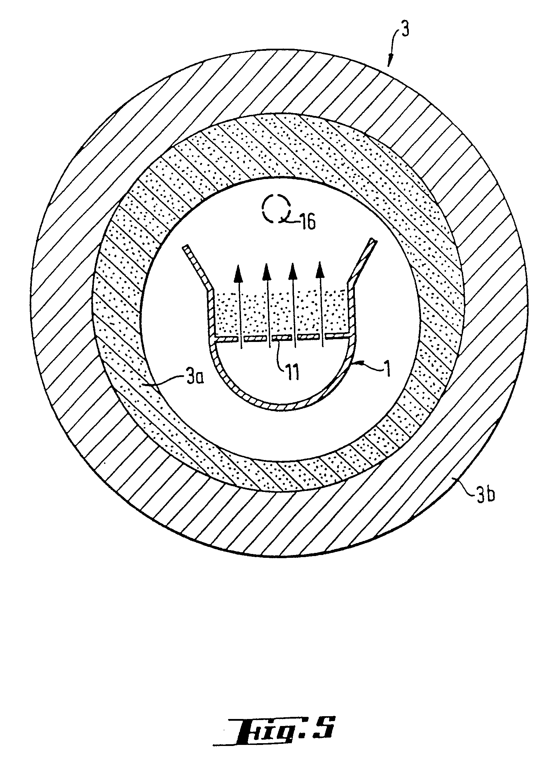

Gemäß Figur 5 ist die Vibrationsfließbettrinne 1, die mit dem Anströmboden 11 versehen ist, zentral in dem Doppelmantel 3 angeordnet. Parallel zu der Vibrationsfließbettrinne 1 ist über ihr die Sekundärluftlanze 16 angeordnet.

Das erfindungsgemäße Verfahren wird anhand der folgenden Beispiele näher erläutert und beschrieben.

| Beispiel | | | 1 | | 2 | |
|---|---|---|---|---|---|---|
| | Rohstoff Verfahren | | Braunkohlenkoks Aktivierung | | | |
| Kohleeintrag | kg/h | | 16 | | 12 | |
| Kohleaustrag | kg/h | | 7,2 | | 5,2 | |
| Abbrand | % | | 55 | | 57 | |
| Vergasungsleitstung | $kgC/m^2/h$[6] | | 42 | | 39 | |
| Heizgasmenge (Propan) | $m^3_n/h$ | $m^3_n/kgC$ | 0 | 0 | 0 | 0 |
| Primärluftmenge | $m^3_n/h$ | $m^3_n/kgC$ | 10 | 1,1 | 7 | 1,0 |
| Sekundärluftmenge | $m^3_n/h$ | $m^3_n/kgC$ | 25 | 2,8 | 35 | 5,2 |
| Dampfmenge | kg/h | kg/kgC | 15 | 1,7 | 20 | 2,9 |

Temperaturen °C

| | | | | | |
|---|---|---|---|---|---|
| Kohlebett | 1 | | 840 | | 710 |
| | 2 | | 760 | | 740 |
| | 3 | | 720 | | 770 |
| Gaskörper | 1 | | 1180 | | 1010 |
| | 2 | | 1120 | | 940 |
| | 3 | | 1040 | | 980 |

(Fortsetzung)

| | | 2) | 1 | 2 | 1 | 2 |
|---|---|---|---|---|---|---|
| Benzolbeladung[3] | p/po=0,9 | g/100 g | 15,2 | 47,6 | 15,2 | 45,2 |
| | p/po=0,1 | g/100 h | n.b. | 17,7 | n.b. | 17,2 |
| Methylenblauzahl[4] | | ml/0,1 g | 3,5 | 14,5 | 3,5 | 13,5 |
| Melassezahl[5] | | mg | ~1500 | 200 | ~1500 | 270 |

2) 1 = Ausgangsmaterial, 2 = Produkt; n.b. = nicht bestimmt
3) Benzolbeladung ist die Menge Benzol, die die Kohle bei 20°C und einem bestimmten Benzolpartialdruck (p/po) adsorbieren kann.
4) Bestimmung nach DAB 6
5) Melassezahl: die Menge Kohle in mg, die unter Standardbedingungen die gleiche Einfärbungsleistung wie eine bestimmte Standard-Aktivkohle erreicht.
6) Stündlich vergaste Kohlenstoffmenge, bezogen auf die Fließbettoberfläche

## Patentansprüche

1. Verfahren zum Aktivieren von Aktivkohole mittels Wasserdampf, dadurch gekennzeichnet, daß man die Reaktion in einem Vibrationsfließbett, das in einem waagerecht liegenden, direkt beheizten Raktionsraum angeordnet ist, wobei eine Vibrationsfließbettrinne (1) in einem Doppelmantel (3) derart angeordnet ist, daß der innere - außen isolierte - Mantel (3a) den brennenden Gaskörper umschließt, hauptsächlich zur Reflexion der Wärmestrahlung dient und keinen mechanischen Belastungen unterworfen wird, und der äußere Mantel (3b), dem der innere Mantel als Strahlungsschutz dient, alle statischen Belastungen aufnimmt und auch für die Abdichtung des Ofeninneren gegen die äußere Atmosphäre sorgt, durchführt und man die Aktivierung bei den folgenden Temperaturbereichen durchführt:

| Dampftemperatur | 600 bis 800°C |
|---|---|
| Fließbett-Temperatur | 600 bis 950°C |
| Gaskörper-Temperatur | 950 bis 1200°C |

2. Verfahren nach Anspruch 1, dadurch gekennzeichnet, daß man die Aktivierungsgase in einem Wärmeaustauscher mit den Reaktionsabgasen auf Temperaturen zwischen 400 und 800°C erhitzt.

3. Verfahren nach Anspruch 1, dadurch gekennzeichnet, daß man die Heizgase entgegen dem Rohkohlestrom führt.

4. Verfahren nach Anspruch 1, dadurch gekennzeichnet, daß man die Heizgase im Gleichstrom mit dem Rohkohlestrom führt.

5. Verfahren nach den Ansprüchen 1 bis 4, dadurch gekennzeichnet, daß man die Rohkohle mit den Reaktionsabgasen vorbehandelt.

6. Verfahren nach den Ansprüchen 1 bis 5, dadurch gekennzeichnet, daß man in den Reaktionsraum zusätzlich mittels einer oder mehrerer Lanzen Sekundärluft einführt.

7. Verfahren nach Anspruch 6, dadurch gekennzeichnet, daß man die Sekundärluft in einem Wärmeaustauscher auf Temperaturen zwischen 200 und 500°C vorheizt.

8. Verfahren nach den Ansprüchen 1 bis 7, dadurch gekennzeichnet, daß man die Heizung ausschließlich durch die Zufuhr von Sekundärluft durchführt.

9. Vorrichtung zur Durchführung des Verfahrens nach den Ansprüchen 1 bis 8, dadurch gekennzeichnet, daß eine Vibrationsfließbettrinne (1) in einem Doppelmantel (3) derart angeordnet ist, daß der innere - außen isolierte - Mantel (3a) den brennenden Gaskörper umschließt, hauptsächlich zur Reflexion der Wärmestrahlung dient und keinen mechanischen Belastungen unterworfen wird, und der äußere Mantel (3b), dem der innere Mantel als Strahlungsschutz dient, alle statischen Belastungen aufnimmt und auch für die Abdichtung des Ofeninneren gegen die äußere Atmosphäre sorgt.

10. Vorrichtung nach Anspruch 9, dadurch gekennzeichnet, daß die Rohkohleaufgabevorrichtung in dem Reaktionsabgaskanal angeordnet ist.

11. Vorrichtung nach den Ansprüchen 9 und 10, dadurch gekennzeichnet, daß innerhalb des Doppelmantels (3) parallel zu der Vibrationsfließbettrinne (1) eine oder mehrere Sekundärluftlanzen (16) angeordnet sind.

12. Vorrichtung nach den Ansprüchen 9 bis 12, dadurch gekennzeichnet, daß die Vibrationsfließbettrinne zwei getrennte Gaszufuhröffnungen und eine Trennwand (18) aufweist.

Claims

1. Process for the activation of active carbon by means of steam, characterized in that the reaction is carried out in a vibratory fluidized bed positioned in a horizontal, directly heated reaction chamber, a vibratory fluidized bed channel (1) being positioned in a double-walled jacket (3) such that the inner jacket (3a) - insulated on the outside - encloses the burning gas body, serves mainly to reflect the radiant heat and is subjected to no mechanical stresses, and the outer jacket (3b), for which the inner jacket serves as protection from radiation, accommodates all the static stresses and also takes care of the sealing of the inside of the furnace against the external atmosphere, and in that the activation is carried out in the following temperature ranges:

| | |
|---|---|
| steam temperature | 600 to 800°C |
| fluidized bed temperature | 600 to 950°C |
| gas body temperature | 950 to 1200°C |

2. Process according to claim 1, characterized in that the activating gases are heated up to tempertures between 400 and 800°C in a heat exchanger using the waste gases of the reaction.

3. Process according to claim 1, characterized in that the heating gases are passed in countercurrent with the stream of crude carbon.

4. Process according to claim 1, characterized in that the heating gases are passed in cocurrent with the stream of crude carbon.

5. Process according to claims 1 to 4, characterized in that the crude carbon is pretreated with the waste gases of the reaction.

6. Process according to claims 1 to 5, characterized in that secondary air is additionally introduced into the reaction chamber by means of one or more lances.

7. Process according to claim 6, characterized in that the secondary air is preheated to temperatures of between 200 and 500°C in a heat exchanger.

8. Process according to claims 1 to 7, characterized in that the heating is performed exclusively by feeding in secondary air.

9. Device for carrying out the process according to claims 1 to 8, characterized in that a vibratory fluidized bed channel (1) is positioned in a double-walled jacket (3) such that the inner jacket (3a) - insulated on the outside - encloses the burning gasbody, serves mainly to reflect the radiant heat and is subjected to no mechanical stresses, and the outer jacket (3b), for which the inner jacket serves as protection from radiation, accommodates all the static stresses and also takes care of the sealing of the inside of the furnace against the external atmosphere.

10. Device according to claim 9, characterized in that the crude carbon feed device is positioned in the reaction waste gas channel.

11. Device according to claims 9 and 10, characterized in that one or more secondary air lances (16) are positioned within the double-walled jacket (3) parallel to the vibratory fluidized bed channel (1).

12. Device according to claims 9 to 12, characterized in that the vibratory fluidized bed channel has two separate gas feed openings and a separating wall (18).

Revendications

1. Procédé d'activation de charbon actif au moyen de vapeur d'eau, caractérisé en ce qu'on réalise la réaction dans un lit fluidisé à vibrations, qui est disposé dans une chambre réactionnelle chauffé directement, couchée horizontalement, une rigole de lit fluidisé à vibrations (1) étant placée dans une double enveloppe (3) de telle sorte que l'enveloppe interne (3a) - isolée extérieurement - entoure le gaz combustible, qu'elle serve surtout à la réflexion du rayonnement calorifique et qu'elle ne soit soumise à aucune contrainte mécanique, et que l'enveloppe externe (3b), qui sert de

6

protection antirayonnement à l'enveloppe interne, supporte toutes les contraintes statiques et assure aussi l'étanchéité de l'intérieur du four vis-à-vis de l'atmosphère externe, et qu'on réalise l'activation dans les intervalles de températures suivantes:

- Température de vapeur    600 à 800°C
- Température de lit fluidisé 600 à 950°C
- Température du gaz       950 à 1200°C

2. Procédé selon la revendication 1, caractérisé en ce qu'on chauffe les gaz d'activation dans un échangeur thermique avec les gaz résiduaires réactionnels entre 400 et 800°C.

3. Procédé selon la revendication 1, caractérisé en ce qu'on injecte les gaz de chauffage à contre courant du flux de charbon.

4. Procédé selon la revendication 1, caractérisé en ce qu'on injecte les gaz de chauffage dans le même sens que le flux de charbon.

5. Procédé selon les revendications 1 à 4, caractérisé en ce qu'on effectue un prétraitement du charbon brut avec les gaz résiduaires réactionnels.

6. Procédé selon les revendications 1 à 5, caractérisé en que l'on injecte en plus dans la chambre réactionnelle de l'air secondaire à l'aide d'une ou plusieurs lances.

7. Procédé selon la revendication 6, caractérisé en ce qu'on préchauffe l'air secondaire dans un échangeur thermique à des températures comprises entre 200 et 500°C.

8. Procédé selon les revendications 1 à 7, caractérisé en ce qu'on réalise le chauffage exclusivement par injection d'air secondaire.

9. Dispositif pour réaliser le procédé selon les revendications 1 à 8, caractérisé en ce qu'une rigole de lit fluidisé à vibrations (1) est placée dans une double enveloppe (3) de telle sorte que l'enveloppe interne (3a) - isolée extérieurement - entoure le gaz combustible, qu'elle serve surtout à la réflexion du rayonnement calorifique et qu'elle ne soit soumise à aucune contrainte mécanique, et que l'enveloppe externe (3b), qui sert de protection antirayonnement à l'enveloppe interne, supporte toutes les contraintes statiques et assure aussi l'étanchéité de l'intérieur du four vis-à-vis de l'atmosphère externe.

10. Dispositif selon la revendication 9, caractérisé en ce que le dispositif d'alimentation en charbon brut est implanté dans le canal des gaz résiduaires réactionnels.

11. Dispositif selon les revendications 9 et 10, caractérisé en ce que dans la double enveloppe (3) parallèlement à la rigole de lit fluidisé à vibrations (1) sont implantées une ou plusieurs lances d'air secondaire (16).

12. Dispositif selon les revendications 9 à 12, caractérisé en ce que la rigole de lit fluidisé à vibrations présente deux orifices séparés d'injection de gaz et une paroi de séparation (18).

7

**Fig.1**

1

**Fig.2**

**Fig. 3**

**Fig. 4**

EP 0 077 462 B1

*Fig: 5*